(19) Europäisches Patentamt
European Patent Office
Office européen des brevets

(11) **EP 2 458 878 A2**

(12) **EUROPEAN PATENT APPLICATION**

(43) Date of publication:
**30.05.2012 Bulletin 2012/22**

(51) Int Cl.:
***H04N 13/00*** *(2006.01)*      ***H04N 13/04*** *(2006.01)*

(21) Application number: **11164018.1**

(22) Date of filing: **28.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.11.2010 KR 20100117482**

(71) Applicant: **Samsung Electronics Co., Ltd.**
**Suwon-si**
**Gyeonggi-do 442-742 (KR)**

(72) Inventors:
• **Zhang, Lei**
 **Gyeonggi-do (KR)**
• **Shon, Young-wook**
 **Gyeonggi-do (KR)**

(74) Representative: **Clark, David James**
 **Appleyard Lees**
 **15 Clare Road**
 **Halifax**
 **HX1 2HY (GB)**

(54) **Image processing apparatus and control method thereof**

(57) An image processing apparatus includes a depth map generator which generates a depth map of a predetermined image which includes at least one object; a disparity estimator which estimates a reference disparity of a left eye image and a right eye image at a predetermined distance from the object based on the generated depth map; a disparity calculator which calculates a changed disparity of the left eye image and the right eye image at a changed distance by using the estimated reference disparity if the predetermined distance is changed; and a three-dimensional (3D) image generator which generates a 3D image which moves horizontally from the left eye image and the right eye image corresponding to the changed disparity.

## FIG. 2

**Description**

BACKGROUND

1. Field

Apparatuses and methods consistent with the exemplary embodiments relate to an image processing apparatus and a control method thereof, and more particularly, to an image processing apparatus which processes a three-dimensional image signal and a control method thereof.

2. Description of the Related Art

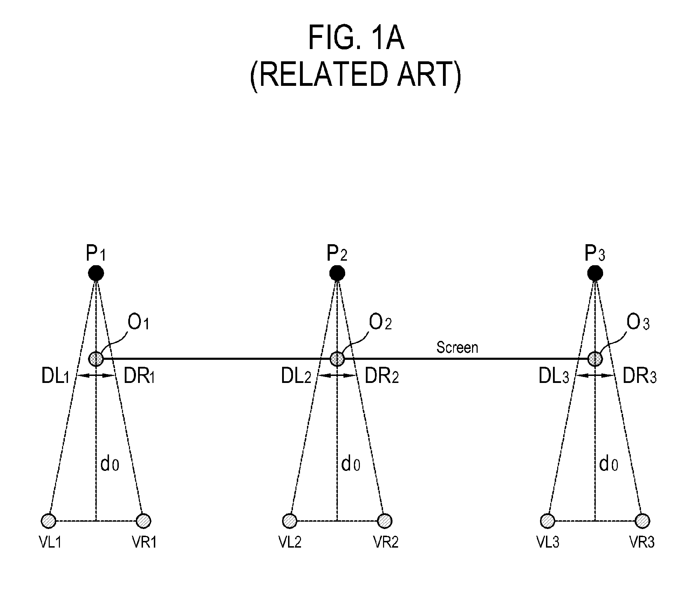

FIG. 1A illustrates a conventional method of adjusting a binocular disparity of a three-dimensional (3D) image. Objects O1, 02, and 03 which are included in a 3D image are presumed to be the same in size and depth value except for their locations on a screen. As shown therein, according to the conventional adjustment method of the binocular disparity, a left eye disparity and a right eye disparity are adjusted to be DL1 and DR1, respectively, for a virtual left eye VL1 and a virtual right eye VR1 so that the object O1 exists in a virtual position P1 corresponding to a predetermined depth value. This also applies to the objects 02 and 03. Accordingly, a distance from a center of the virtual left eye VL1 and the virtual right eye VR1 to the virtual position P1 of the object O1 a distance from a center of a virtual left eye VL2 and virtual right eye VR2 to a virtual position P2 of the object 02, and a distance from a center of a virtual left eye VL3 and a virtual right eye VR3 to a virtual position P3 of the objection 03 are all d0. However, this method does not take into account of a real position of both eyes.

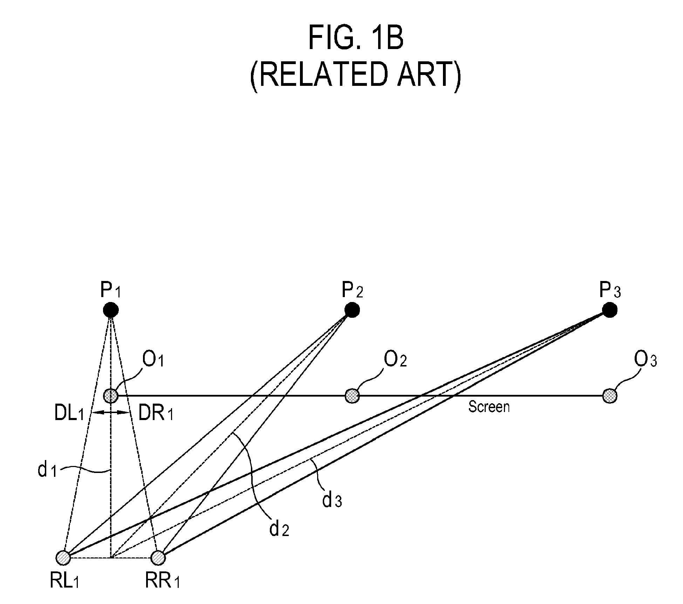

Referring to FIG. 1B, the objects O1 02, and 03 in an image have the same depth value and size, but look different in size depending on a virtual position P1 of the object O1 a virtual position P2 of the object 02, and a virtual position P3 of the object 03 from real positions of the left eye RL1 and right eye RR1. This is because the size of the object is in inverse proportion to a distance, and a distant object looks small and a closer object looks large.

Accordingly, a distance d1 1 from the center of the real left eye RL1 and the real right eye RR1 to the virtual position P1 of the object O1, a distance d2 from the center of the real left eye RL1 and the real right eye RR1 to the virtual position P2 of the object 02, and a distance d3 from the center of the real left eye RL1 and the real right eye RR1 to the virtual position P3 of the object 03 are different. Thus, even though the objects O1 02 and 03 should look substantially the same, the object O1 looks larger than the object 03 in the real left eye position RL1 and real right eye position RR1. Due to the foregoing, a user may not fully enjoy a real 3D effect with respect to the objects 02 and 03 in the position of the real left eye RL1 and the real right eye RR1.

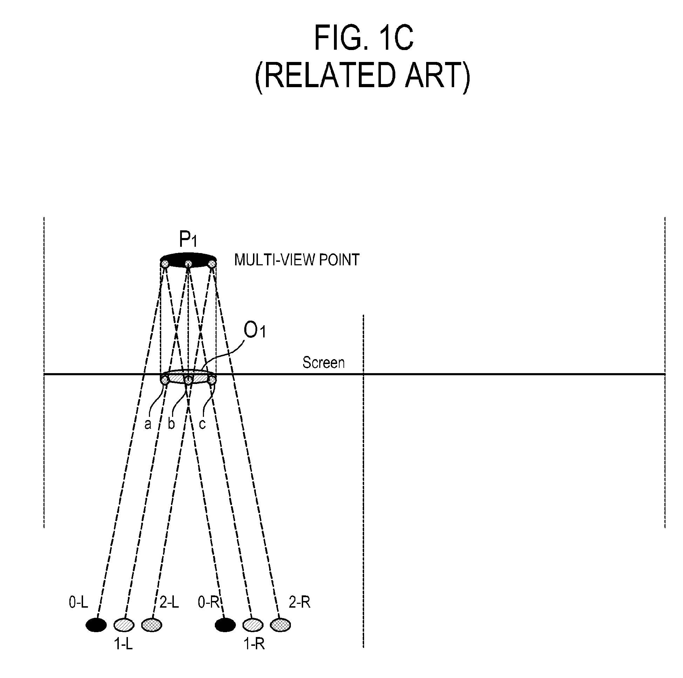

The above problem also arises in the case of a 3D image having a multi view point. As shown in FIG. 1C, there are three different view points a, b and c with respect to an object O1 of an image, and accordingly, the three different view points have three different view areas from three different view zones. Nevertheless, according to the conventional disparity adjustment method, all of the three view points are adjusted to have the same disparity so that there arises a view area in which a user may not fully enjoy the intended 3D effect.

SUMMARY

One or more exemplary embodiments provide an image processing apparatus and a control method thereof which processes a three-dimensional image to enable a user to consistently enjoy an intended 3D effect of an object in an image regardless of a position of the object in the image and a position of a user.

According to an aspect of an exemplary embodiment, there is provided an image processing apparatus. The image processing apparatus may include a depth map generator which generates a depth map of a predetermined image which includes at least one object; a disparity estimator which estimates a reference disparity of a left eye image and a right eye image at a predetermined distance from the object based on the generated depth map; a disparity calculator which calculates a changed disparity of the left eye image and the right eye image at a changed distance by using the estimated reference disparity if the predetermined distance is changed; and a three-dimensional (3D) image generator which generates a 3D image which moves horizontally from the left eye image and the right eye image corresponding to the changed disparity.

The image processing apparatus may further include a display unit which displays thereon the left eye image and the right eye image whose disparities are changed and which are output by the 3D image generator.

The predetermined distance may be a preset distance between the object displayed on the display unit and both eyes, and the changed distance include a change in the preset distance which results from at least one of a left and right movement of the object on the display unit, a left and right movement of both eyes, and a back and forth movement of both eyes.

The disparity calculator may calculate a changed disparity to have the left eye image and the right eye image move horizontally in the same direction if the object on the display unit is located in a left side or a right side of both eyes due to the changed distance.

The disparity calculator may calculate a changed disparity to have the left eye image and the right eye image move horizontally in different directions if the object on the display unit is located between both eyes due to the changed distance.

The image processing apparatus may further include a first size adjustor which adjusts a viewing size of the object viewed from the changed distance to a size from a distance before change if the predetermined distance is changed.

The image processing apparatus may further include a second size adjuster which enlarges or reduces a predetermined region of the image corresponding to the generated depth map.

The second size adjuster may enlarge the predetermined region if a depth value of the predetermined region is equal to or greater than a critical value, and reduces the predetermined region if the depth value of the predetermined region is less than the critical value.

The image processing apparatus may further include a region setter which sets a predetermined region. The region setter may generate a binary map of pixels to determine a location, size and shape of the predetermined region.

The image processing apparatus may further include a receiver which receives a two-dimensional or three-dimensional image signal.

According to an aspect of another exemplary embodiment, there is provided a control method of an image processing apparatus. The control method may include generating a depth map of a predetermined image which includes at least one object; estimating a reference disparity of a left eye image and a right eye image at a predetermined distance from the object based on the generated depth map; calculating a changed disparity of the left eye image and the right eye image at a changed distance by using the estimated reference disparity if the predetermined distance is changed; generating a three-dimensional image which moves horizontally from the left eye image and right eye image corresponding to the changed disparity.

The control method may further include displaying a left eye image and a right eye image having changed disparities which are output by the 3D image generator.

The predetermined distance may be a preset distance between the object displayed on the display unit and both eyes, and the cchanged distance may include a change in the preset distance which results from at least one of a left and right movement of the object on the display unit, a left and right movement of both eyes, and a back and forth movement of both eyes.

The calculating the changed disparity may include calculating a changed disparity to have the left eye image and the right eye image move horizontally in the same direction if the object on the display unit is located in a left side or a right side of both eyes due to the change in the distance.

The calculating the changed disparity may further include calculating a changed disparity to have the left eye image and the right eye image move horizontally in different directions if the object on the display unit is located between both eyes due to the changed distance.

The control method may further include adjusting a viewing size of the object viewed from the changed distance to a size of the object from a distance before change if the predetermined distance is changed.

The control method may further include enlarging or reducing a predetermined region of the image corresponding to the generated depth map.

The adjusting the size of the region may include enlarging the predetermined region if a depth value of the predetermined region is equal to or greater than a critical value, and reducing the predetermined region if the depth value of the predetermined region is less than the critical value.

The adjusting the size of the region may further include setting a binary map of pixels to determine a location, size, and shape of the predetermined region.

The control method may further include receiving a two-dimensional or three-dimensional image signal.

According to the present invention there is provided an apparatus and method as set forth in the appended claims. Other features of the invention will be apparent from the dependent claims, and the description which follows.

BRIEF DESCRIPTION OF THE DRAWINGS

The above and/or other aspects will become apparent and more readily appreciated from the following description of the exemplary embodiments, taken in conjunction with the accompanying drawings, in which:

FIGS. 1A to 1C illustrate a conventional disparity adjustment method;
FIG. 2 is a control block diagram of an image processing apparatus according to an exemplary embodiment;
FIG. 3 is an illustration for an example of a calculation of disparity by a disparity calculator of the image processing apparatus according to the exemplary embodiment;

FIG. 4 is an illustration for an example of a calculation of disparity by the image processing apparatus when a position of an object moves to the left and right, according to the exemplary embodiment;

FIG. 5 is an illustration for an example of a calculation of disparity by the image processing apparatus when a position of both eyes moves to the left and right, according to the exemplary embodiment;

FIG. 6 is an illustration for an example of a calculation of disparity by the image processing apparatus when a position of both eyes moves back and forth, according to the exemplary embodiment;

FIG. 7 is an illustration for an example of a calculation of disparity by the disparity calculator of the image processing apparatus for multi viewers, according to the exemplary embodiment;

FIG. 8 illustrates an example of adjusting a size of an object by the image processing apparatus according to the exemplary embodiment;

FIG. 9 illustrates an example of adjusting a size of a predetermined region of interest by the image processing apparatus according to the exemplary embodiment; and

FIG. 10 is a flowchart of a control method of the image processing apparatus according to the exemplary embodiment.

## DETAILED DESCRIPTION

Hereinafter, the present inventive concept will be described in detail with reference to accompanying drawings, in which one of more exemplary embodiments of the invention are shown, so as to be easily realized by a person having ordinary knowledge in the art. The exemplary embodiments may be embodied in various forms without being limited to the exemplary embodiments set forth herein; rather, these exemplary embodiments are provided so that this disclosure will be thorough and complete, and will fully convey the inventive concept to those of ordinary skill in the art. Descriptions of well-known parts are omitted for clarity, and like reference numerals refer to like elements throughout.

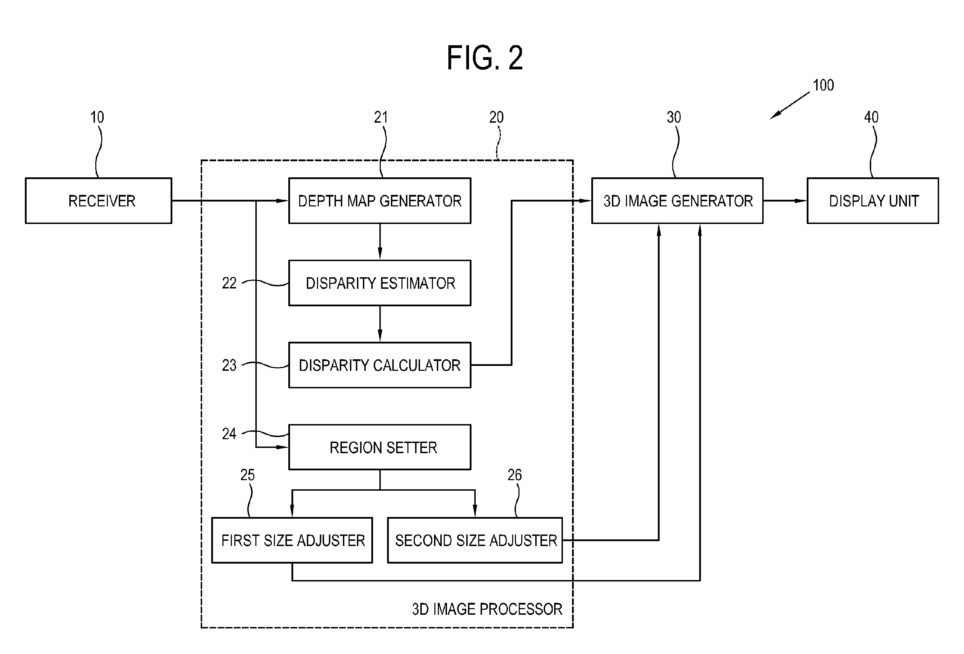

FIG. 2 is a control block diagram of an image processing apparatus according to an exemplary embodiment.

An image processing apparatus 100 according to the present exemplary embodiment includes a receiver 10, a three-dimensional (3D) image processor 20, a 3D image generator 30 and a display unit 40.

The image processing apparatus 100 may include any type of electronic devices which receive and process a two-dimensional (2D) or 3D image signal from an external image source (not shown). For example, the image processing apparatus 100 may include, but is not limited to, a set-top box, a personal video recorder (PVR) or a projector which processes a 2D/3D image signal and transmits the processed signal to an external display apparatus; or a display apparatus such as a television (TV) or a personal computer (PC). The image processing apparatus 100 may include a display apparatus which has a medium or large size display screen.

The receiver 10 receives a 2D or 3D image signal from an external image supply source. An image which corresponds to the received 2D or 3D image signal may include at least one object therein.

The image supply source may vary. That is, the image processing apparatus 100 may receive an image signal from various image supply sources for example, but not limited to, a computer main body (not shown) having a central processing unit (CPU) (not shown) and a graphic card (not shown), generating an image signal and providing the image signal locally; a server (not shown) providing an image signal in a network; and a broadcasting transmitter (not shown) transmitting a broadcasting signal by airwave or cable.

If the image processing apparatus 100 includes a TV, the receiver 10 may receive a radio frequency (RF) signal from a broadcasting receiver wirelessly, or an image signal according to composite video, component video, super video, Syndicat des Constructeurs d'Appareils Radiorécepteurs et Téléviseurs (SCART), or High Definition Multimedia Interface (HDMI) standards. The receiver 10 may further include an antenna and/or a tuner (not shown) to tune a broadcasting signal.

If the image processing apparatus 100 includes a PC monitor, the receiver 10 may be provided according to D-subminiature (D-SUB) connector which transmits an RGB signal by VGA, Digital Video Interactive-Analog (DVI-A), Digital Video Interactive-Integrated Digital/Analog (DVI-I), DVI-Digital, or HDMI standards. The receiver 10 may include a DisplayPort, Unified Display Interface (UDI) or a wireless HD interface.

Upon receiving a 2D or 3D image signal, the image processing apparatus 100 may process and display the 2D image or 3D image on a display unit 40. Unlike the 2D image, the 3D image is classified into a left eye image corresponding to a user's left eye and a right eye image corresponding to a user's right eye. If the image processing apparatus 100 receives a 3D image signal, it alternately displays a frame for the left eye image and a frame for the right eye image on the display unit 40.

The 3D image processor 20 includes a depth map generator 21, a disparity estimator 22, a disparity calculator 23, a region setter 24, a first size adjuster 25, and a second size adjuster 26.

The depth map generator 21 generates a depth map of an image signal received by the receiver 10. If a 2D image signal is received by the receiver 10, the depth map generator 21 may generate a depth map by a depth map estimation algorithm to generate a 3D image signal from the received 2D image signal. If a 2D image signal including depth information is received by the receiver 10, the depth map generator 21 may extract depth information from the received 2D image signal and generate a depth map based on the extracted depth information. If a 3D image signal including a left eye image and a right eye image is received by the receiver 10, the depth map generator 21 may generate a depth map by estimating a depth map from the left eye image and the right eye image.

The disparity estimator 22 may estimate a reference disparity of a left eye image and a right eye image at a predetermined distance from the object based on the depth map generated by the depth map generator 21. The disparity estimator 22 may estimate a reference disparity of a left eye image and a right eye image by a disparity estimation algorithm for a left eye and a right eye which are at a predetermined distance from the object and act as a basis. The predetermined distance may include a preset distance between the object displayed on the display unit 40 and both eyes. The object displayed on the display unit 40 may include a real position of the object in an image displayed on the display unit 40 and a virtual position of the object having the predetermined depth value.

If the predetermined distance is changed, the disparity calculator 23 calculates a changed disparity of the left eye image and the right eye image at the changed distance by using the estimated reference disparity, and transmits the changed disparity calculated as above to the 3D image generator 30. The change in the predetermined distance may include a change in distance resulting from at least one of a left and right movement of the object on the display unit 40, a left and right movement of both eyes, and a back and forth movement of both eyes.

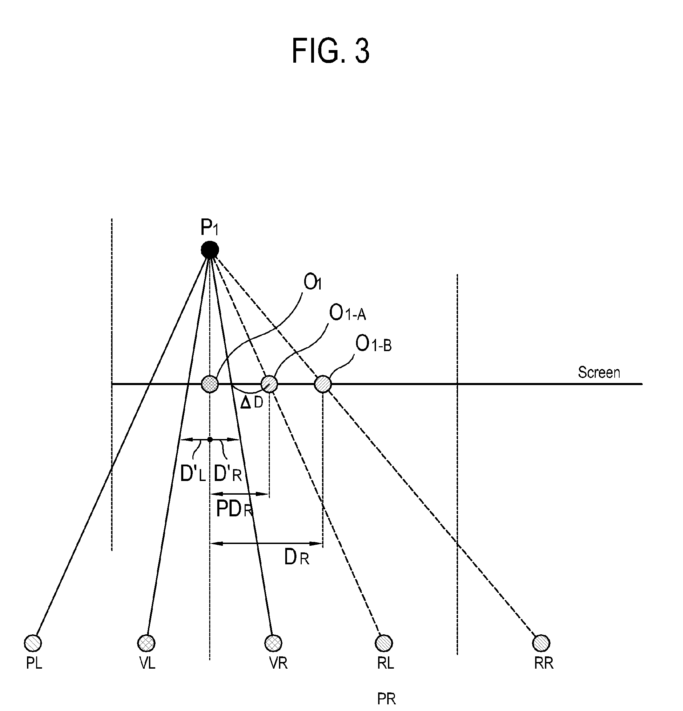

The left and right movement of the object on the display unit 40 may be identified by analyzing an image of frames including the object. The left and right/back and forth movement of both eyes means a movement of a user viewing an image, and such movement may be identified by a known eye tracking sensor or face recognition sensor. An example of the calculation of the disparity by the disparity calculator 23 will be described in more detail with reference to FIGS. 3 to 7.

The region setter 24 may set a region of the object by pixels and transmit the set region to the first size adjuster 25 to determine a location, size and shape of the object by analysis of the image by frames including the object. The region setter 24 may set the region of the object by generating a binary map of the pixels.

The region setter 24 may set a predetermined region having a particular position, size, and shape in an image, instead of the object, and transmit such predetermined region to the second size adjuster 26. The predetermined region may automatically set as a region of interest (ROI) in the image or an ROI may be designated by a user.

The automatic setting of the ROI may be performed on the basis of brightness, movement, and size of the object by analysis of frames of the image. Otherwise, a predetermined region which is designated by a user through a user selection unit (not shown) may be set as an ROI. If the ROI is set, the region setter 24 generates a binary map of the pixel by a following formula expressed as Formula:

$$P(x, y) = \begin{cases} 0, Not\ RoI \\ 1, RoI \end{cases}$$

[Formula 1]

The ROI is equal to 1 (the ROI is set in white), and the remaining regions excluding the ROI are equal to 0 (the remaining regions are set in black). P(x,y) refers to a pixel of the ROI map.

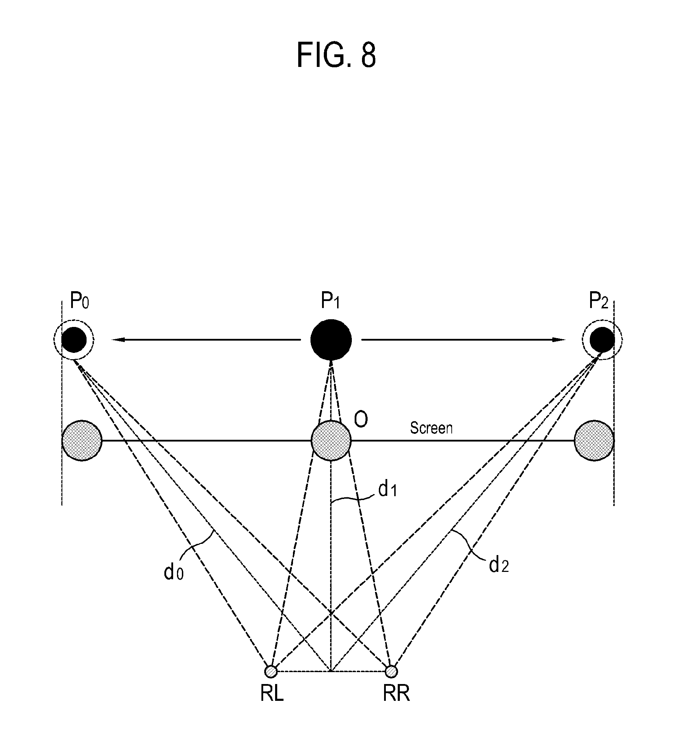

If a predetermined distance between the object on the display unit 40 and both eyes is changed, the first size adjuster 25 may adjust a viewing size of the object viewed from the changed distance to a size of the object from the distance before change. Region information of the object on the display unit 40 at the predetermined distance may be provided by the region setter 24 to obtain size information of the object. If the predetermined distance is changed, the object looks larger or smaller due to a perspective as much as the changed distance. The first size adjuster 25 may adjust the size of the object to look identical to that from the original distance by compensating for the size of the object whose size is changed by the perspective. An example of the foregoing will be described in detail with reference to FIG. 8.

The second size adjuster 26 enlarges the size of the ROI if a depth value of the ROI set by the region setter 24 is a predetermined critical value or more, and reduces the size of the ROI if the depth value of the ROI is smaller than the critical value. The depth value of the ROI may be obtained from a depth map generated by the depth map generator 21. Accordingly, enlarging or reducing the ROI by a user's setting may draw a user's attention.

The image processing apparatus 100 may further include a general processor (not shown) which processes a signal in addition to the 3D image processor 20. Accordingly, the general processor may process an image signal received through the receiver 10, in various manners. The general processor may vary, and may decode or encode an image corresponding to various image formats, deinterlace, convert a frame fresh rate of an image, scale, reduce noise from an image for improvement of picture quality, enhance details or scan lines of an image. The signal processor (not shown) may perform the above process individually or collectively.

If the disparity of the 3D image is changed, the 3D image generator 30 receives the changed disparity from the disparity calculator 23 and moves the left eye image and right eye image horizontally corresponding to the changed disparity to thereby generate a 3D image. In addition, upon receiving a signal from the first size adjuster 25 and/or the second size adjuster 26 to adjust the size of the object or a predetermined ROI in the image, the 3D image generator 30 generates a 3D image reflecting the size adjusting signal and transmits the 3D image to the display unit 40.

The display unit 40 displays thereon a 3D image generated by the 3D image generator 30. The display unit 40 includes a display panel (not shown) displaying the 3D image thereon, and a panel driver (not shown) driving the panel. The display panel may include a liquid crystal display (LCD) panel including a liquid crystal layer, an organic light emitting display (LED) including an organic light emitting layer, or a plasma display panel (PDP).

FIG. 3 is an illustration for an example of calculating a disparity of the disparity calculator 23 of the image processing apparatus according to an exemplary embodiment.

As shown therein, an object O1 in an image is located in a virtual position P1 corresponding to a depth map generated from a received image signal by the depth map generator 21. The disparity estimator 23 estimates a binocular disparity with respect to the object O1 in a virtual left eye position VL and a virtual right eye position VR to thereby estimate a left eye disparity D'L and a right eye disparity D'R. However, a real left eye position RL and a real right eye position RR are moved to the right from the virtual left eye position VL and the virtual right eye position VR. Thus, a distance from the virtual position P1 of the object O1 to a center of the real left eye position RL and right eye position RR becomes farther than a distance from the virtual position P1 of the object O1 to a center of the virtual left eye position VL and right eye position VR, which causes a change. The 3D effect from the real left eye position RL and right eye position RR is less than that from the virtual left eye position VL and right eye position VR. To compensate for such 3D effect, the left eye image of the object O1 should move horizontally to a position 01-A and the right eye image should move horizontally to a position 01-B for the intended 3D effect of the object O1 in the real left eye position RL.

Accordingly, the disparity calculator 23 calculates a disparity difference value ΔD between the estimated reference right eye disparity D'R and the disparity of the position 01-A to which the left eye image should move horizontally. Then, a disparity DL of the left eye image in the real left eye position RL is as in a following Formula 2.

To calculate a disparity DR of the right eye image from the real right eye position RR, the real left eye position RL is presumed to be a fake right eye position PR, and a fake left eye position PL is set to form an isosceles triangle including the fake right eye position PR and the virtual position P1 of the object O1 The difference between the disparity PDR of the fake right eye image from the fake right eye position PR and the disparity DR' of the virtual right eye image is ΔD. Also, a difference between the real position 01-A of the left eye image from the real left eye position RL and the position 01-B of the right eye image from the real right eye position RR is almost similar to the reference binocular disparity (D'L + D'R). The disparity DR of the real right eye image from the real right eye position RR is as in a following Formula 2:

$$D_L = D_L^{'} + \Delta D = D'_R + \Delta D$$

$$D_R = D_L + (D'_L + D'_R) \qquad \text{[Formula 2]}$$

Then, the 3D effect of the object O1 in the virtual left eye and right eye positions is the same as that of the object O1 in the real left eye and right eye positions. Thus, a user may feel the same 3D effect of the object O1 regardless of the virtual left eye and right eye positions or real left eye and right eye positions.

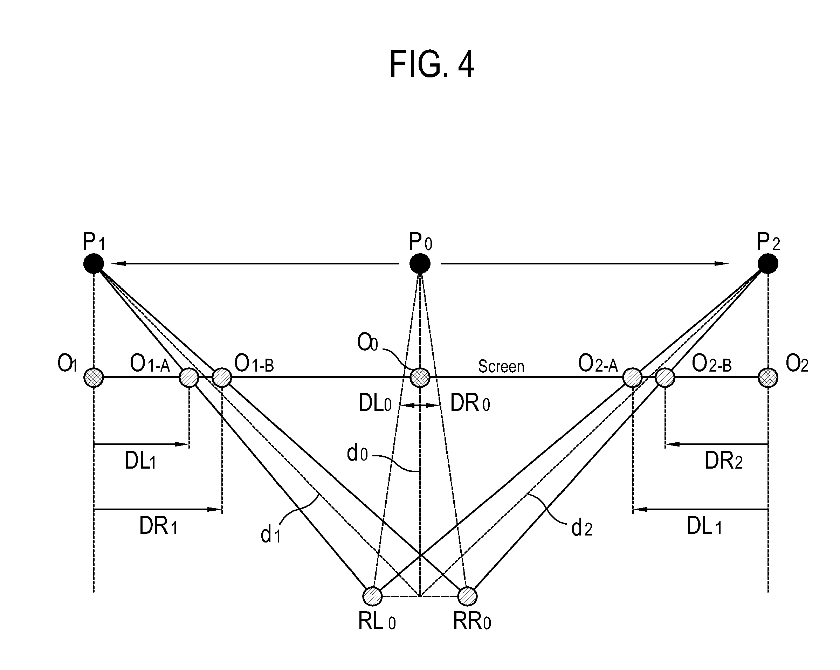

FIG. 4 is an illustration for an example of a calculation of disparity of the image processing apparatus when the position of the object moves to the left and right.

If the object O moves to the left and right on the display unit 40, the size and depth value of the object O are the same within an image displayed on the display unit 40. Thus, a user should see the same size and feel the same 3D effect even if the object O moves to the left and right on the display unit 40.

The disparity estimator 22 estimates reference disparities DL0 and DR0, and generates and displays the horizontally-moved 3D image for the object O in the image to have a position 00 on the display unit 40 and a virtual position P0 felt by a user corresponding to the depth map generated by the depth map generator 21 from the real left eye and right eye positions RL0 and RR0.

If the object O moves to the position O1 on the display unit 40 and the virtual position P1 felt by a user, a distance d0 from the position P0 of the object O to a center of the real left eye and right eye RL0 and RR0 is different from a distance d1 from the moved position P1 of the object O to a center of the real left eye and right eye positions RL0 and RR0. Thus, a user may not feel the same 3D effect of the object O in the real left eye and right eye positions RL0 and RR0 as in the position P0.

If the object O moves to a position O1 on the display unit 40 and a virtual position P1 felt by a user, a conventional disparity estimation is based on a line connecting the virtual position P1 and the position O1 on the display unit 40.

However, the left eye image of the object O should be in a position 01-A and the right eye image should be in the position 01-B for a user to feel the same 3D effect of the object O from the real left eye and right eye positions RL0 and RR0 as from the position P0. Accordingly, in consideration of the left eye disparity and right eye disparity based on the line connecting the virtual position P1 estimated by the disparity estimator 22 and the position O1 on the display unit 40, a disparity DL1 of the left eye image for the real left eye position RL0 and a disparity DR1 of the right eye image for the real right eye position RR0 may be calculated by the Formula 2 as illustrated in FIG. 3.

This may also apply to the case when the object O moves to a position P2 on the display unit 40 and a virtual position P2 felt by a user to thereby calculate a disparity DL2 of the left eye image for the real left eye position RL0 and a disparity DR2 of the right eye image for the real right eye position RR0.

According to the present inventive concept, if the position of the object O moves to the left side, it is located in the left side of user both eyes. If the position of the object O moves to the right side, it is located in the right side of user's both eyes. If the position of the object O is located in the left side or right side of the left eye and right eye, the disparity calculator 23 may calculate the disparity of the left eye image and the right eye image to change in the same direction.

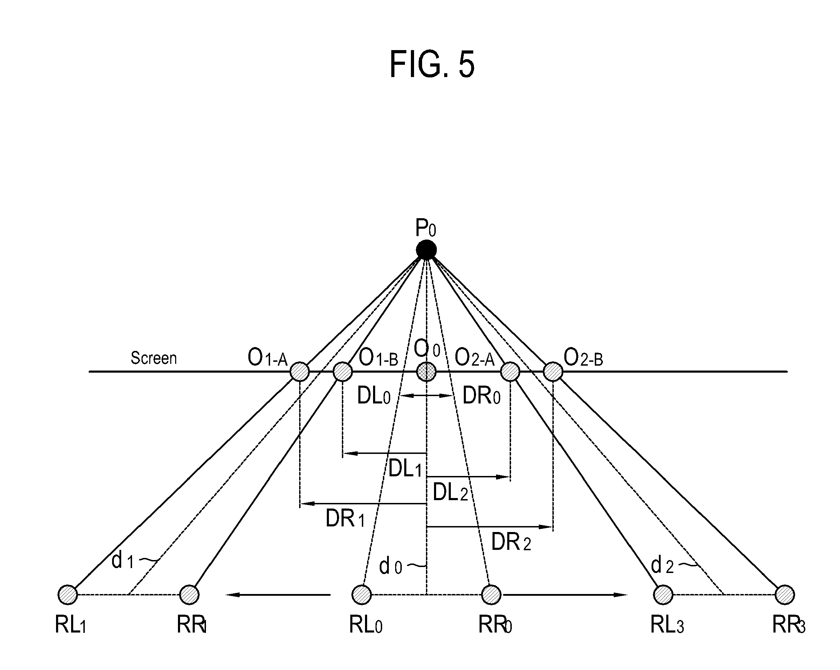

FIG. 5 is an illustration for an example of a calculation of disparity of the image processing apparatus when the position of both eyes moves to the left and right sides.

Unlike in FIG. 4, a position of an object O is fixed, but a user moves to the left and right sides.

Reference left eye and right eye positions RL0 and RR0 of a user move to the right side, and positions of left and right eyes move to RL2 and RR2, respectively. Thus, a distance d0 from a position P0 of the object O to a center of real left eye and right eye positions RL0 and RR0 is different from a distance d2 from a moved position P2 of the object O to a center of the real left eye and right eye positions RL2 and RR2. A user may not feel the same 3D effect of the object O from the real left eye and right eye positions RL0 and RR0 as in the position P0.

To solve the foregoing problem, a left eye image should move to a position 02-A and a right eye image should move to a position 02-B from the changed positions RL2 and RR2. Thus, the disparity calculator 23 may calculate a disparity DL2 of the left eye image and a disparity DR2 of the right eye image from the changed positions RL2 and RR2 based on the Formula 2 as illustrated in FIG. 3.

This also applies to the case when the left eye position and right eye position RL0 and RR0 move to the left side, and the left eye position and right eye position are changed to RL1 and RR1. The disparity calculator 23 may calculate a disparity DL1 of the left eye image and a disparity DR1 of the right eye image from the changed positions RL1 and RR1 based on the Formula 2 as illustrated in FIG. 3.

If a user moves to the left side, the position of the object O is located in the right side of user's both eyes. If a user moves to the right side, the position of the object O is located in the left side of user's both eyes. Accordingly, if the position of the object O is located in the left side or right side of the left eye and right eye, the disparity calculator 23 may calculate the disparity of the left eye image and the right eye image to change in the same direction.

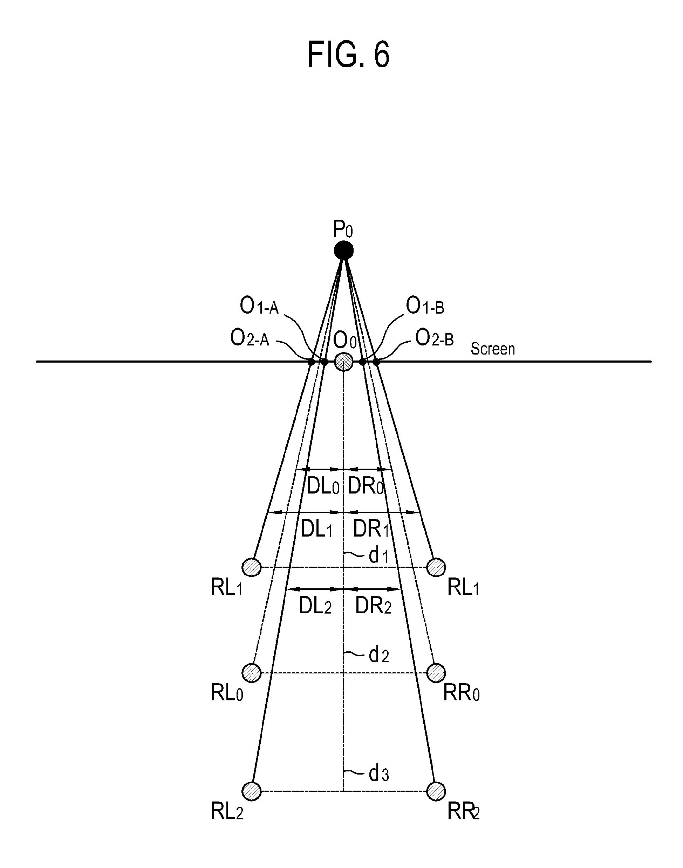

FIG. 6 is an illustration for an example of a calculation of disparity of the image processing apparatus when the position of both eyes moves back and forth.

Unlike in FIG. 5, the position of the object O is fixed, but a user moves back and forth.

Reference left eye and right eye positions RL0 and RR0 of a user move forward, and positions of left and right eyes move to RL1 and RR1, respectively. Thus, a distance d0 from a position P0 of the object O to a center of reference left eye and right eye positions RL0 and RR0 is different from a distance d1 from the position P0 to a center of the changed left eye and right eye positions RL1 and RR1. A user may not feel the same 3D effect of the object O from the real left eye and right eye positions RL0 and RR0 as in the position P0.

To solve the foregoing problem, a left eye image should move to a position 01-A and a right eye image should move to a position 01-B from the changed positions RL1 and RR1. Thus, the disparity calculator 23 may calculate a disparity DL1 of the left eye image and a disparity DR1 of the right eye image from the changed positions RL1 and RR1 based on the formula 2 as illustrated in FIG. 3.

This also applies to the case when the left eye position and right eye position RL0 and RR0 move backward and the left eye position and right eye position are changed to RL2 and RR2. The disparity calculator 23 may calculate a disparity DL2 of the left eye image and a disparity DR2 of the right eye image from the changed positions RL2 and RR2 based on the Formula 2 as illustrated in FIG. 3.

According to the present inventive concept, a user moves back and forth, i.e., further from or closer to the display screen, and the position of the object O is located between user's both eyes always. Accordingly, if the position of the object O is located between the left eye and the right eye, the disparity calculator 23 may calculate the disparity of the left eye and right eye due to the back and forth movement of the left eye and right eye, to change in different directions.

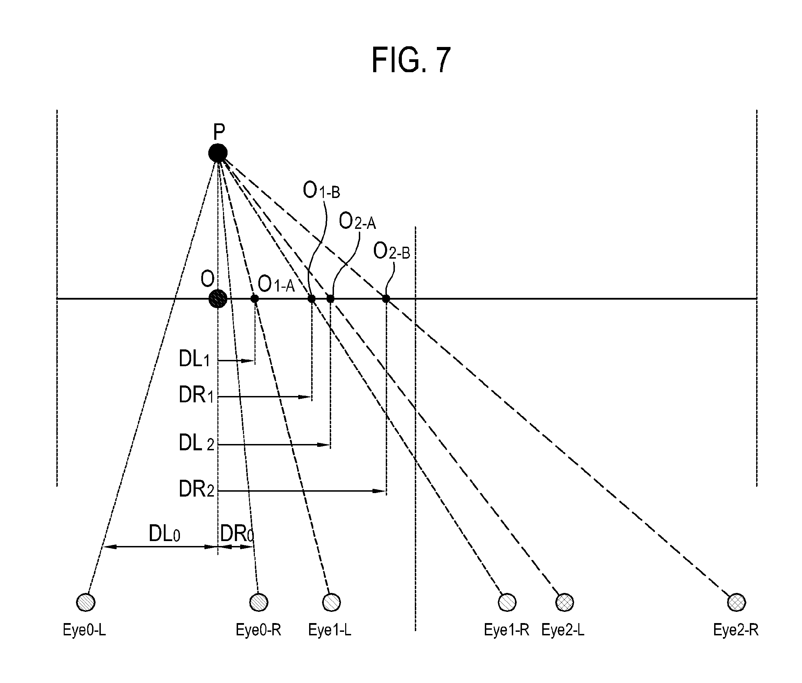

FIG. 7 is an illustration for an example of calculating a disparity by the disparity calculator 23 of the image processing apparatus for multi-viewers.

If there are multiple viewers for a single object O and positions of left eye and right eye of the multiple viewers are different, the disparity calculator 23 may calculate an individual disparity for each of the multiple viewers in the same method as in FIG. 5.

If left eye position and right eye position of one of the multiple viewers are Eye0-L and Eye0-R, the disparity calculator 23 calculates a binocular disparity of the object O based on the above positions to thereby calculate DL0 and DRO. If left eye and right eye positions of another one of the multiple viewers are Eye1-L and Eye1-R, the disparity calculator 23 may calculate DL1 and DR1 by the Formula 2 based on the disparities DL0 and DR0 calculated from the positions Eye0-L and Eye0-R. This also applies to the case when the positions of a user are Eye2-L and Eye2-R. The disparity calculator 23 may calculate DL2 and DR2 by the formula 2 based on the disparities DL0 and DR0 calculated from the positions Eye0-L and Eye0-R. Thus, a user may feel the intended 3D effect of the object O regardless of his/her position.

FIG. 8 illustrates an example of adjusting a size of an object by the image processing apparatus according to the exemplary embodiment.

The object O has a predetermined size and depth value and moves from a virtual position P1 felt by a user to a position P2. Thus, a distance d1 from a center of positions RL and RR of user's both eyes to the position P1 is different from a distance d2 from the center thereof to the position P2. Accordingly, the distance d2 from the center thereof to the position P2 is farther from the distance d1 from the center thereof to the position P1. Then, a user feels that the object O becomes smaller from the position P2 due to a perspective even though the object O is not changed in size in an image.

To compensate for the size, upon a change in the distance from the center of the left eye and right eye positions to the object O, the first size adjuster 25 adjusts a viewing size of the object viewed from the changed distance to be a size from the distance before change. The ratio of adjusting the size of the object O depends on the size of the display unit 40, a size of an object in an image, and a distance between the object and user's both eyes. Then, a user may feel the same size of the object O whether the object O is located in the position P1 or position P2.

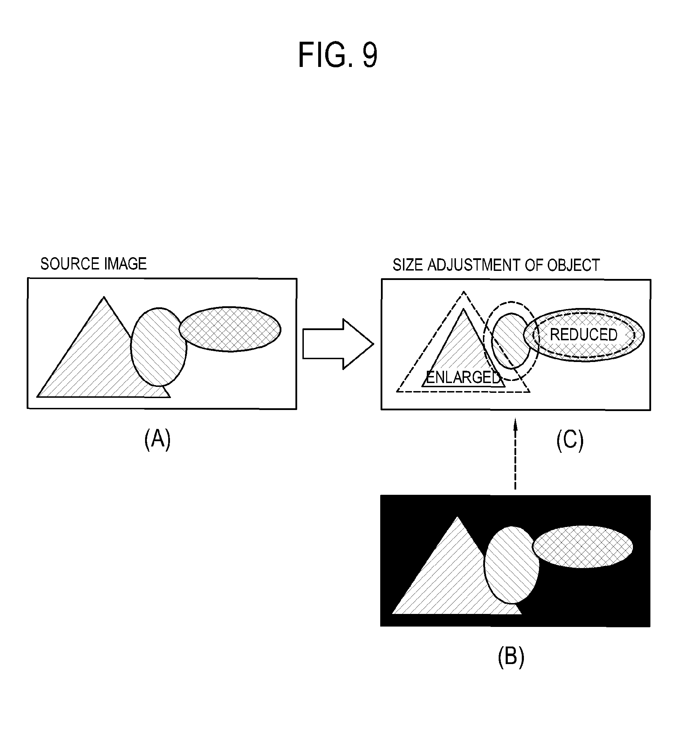

FIG. 9 illustrates an example of adjusting a size of a predetermined ROI by the image processing apparatus according to the exemplary embodiment.

The region setter 24 analyzes a source image received by the receiver 10, automatically sets the ROI based on brightness or movement of the image or sets an ROI with a region drawing most attention from a user after being displayed on the display unit 40 or sets the RIO as designated by a user. The region setter 24 may generate a binary map based on the pixel of the ROI.

The source image A includes an object in triangular, vertically-oval or horizontally-oval shape. The object is set as the ROI by the region setter 24.

The second size adjuster 26 determines a depth value of the objects according to the depth map generated by the depth map generator 10 with respect to the source image (B). If the depth value is smaller than a predetermined value, the second size adjuster 26 may reduce the size of the object. If the depth value is a predetermined value or more, the second size adjuster 26 may enlarge the size of the object. As a result, the horizontally-oval object may be enlarged further, and the remaining two objects may be reduced (C).

Enlargement and reduction of the ROI may be performed by a user's setting instead of based on the depth value as in the case when the setting of the ROI may be designated by a user.

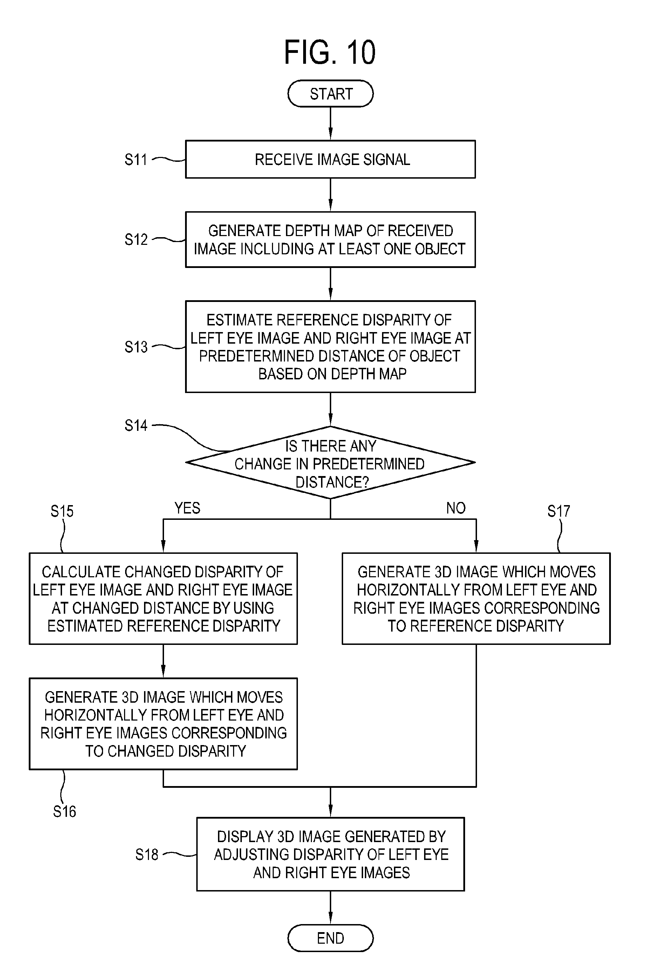

FIG. 10 is a flowchart of a control method of the image processing apparatus according to the exemplary embodiment.

If a 2D or 3D image signal is received (S11), a depth map is generated with respect to the received image including at least one object (S12). The reference disparities of the left eye image and right eye image at a predetermined distance from the object are calculated based on the generated depth map (S13), and it is identified whether there is any change in the predetermined distance (S14). If there is any change in the predetermined distance, changed disparities of the left eye image and right eye image at the changed distance are calculated (S15), and the 3D image which moves horizontally from the left eye image and right eye mage is generated corresponding to the changed disparities (S16).

If there is no change in the predetermined distance, the 3D image which moves horizontally from the left eye image and right eye image is generated corresponding to the reference disparity (S17).

Then, the disparities of the left eye image and right eye image are adjusted and the generated 3D image is displayed (S18).

Further to the operation S16, if the predetermined distance is changed, an operation of adjusting the viewing size of the object viewed from the changed distance to the size of the object from the distance before change may be performed.

Also, the control method may further include an operation of setting a binary map of pixels to determine a location, size, and shape of a predetermined region with respect to the predetermined image received at operation S11; and an operation of enlarging or reducing the size of the set predetermined region corresponding to the depth map generated at operation S12. At the operation of adjusting the size of the region, the predetermined region may be enlarged if the depth value of the predetermined region is a critical value or more, and reduced if the depth value of the predetermined region is smaller than the critical value.

As described above, an image processing apparatus and a control method thereof according to the present inventive concept processes a 3D image for a user to feel a consistent 3D effect of an object regardless of a position of the object in the image and a user's position.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing apparatus comprising:

   a depth map generator which generates a depth map of a predetermined image which comprises at least one object;
   a disparity estimator which estimates a reference disparity of a left eye image and a right eye image at a predetermined distance from the object based on the generated depth map;
   a disparity calculator which calculates a changed disparity of the left eye image and the right eye image at a changed distance by using the estimated reference disparity if the predetermined distance is changed; and
   a three-dimensional (3D) image generator which generates a 3D image which moves horizontally from the left eye image and the right eye image corresponding to the changed disparity.

2. The image processing apparatus according to claim 1, further comprising a display unit which displays thereon the left eye image and the right eye image whose disparities are changed and which are output by the 3D image generator.

3. The image processing apparatus according to claim 2, wherein the predetermined distance comprises a preset distance between the object displayed on the display unit and both eyes, and the changed distance comprises a change in the preset distance which results from at least one of a left and right movement of the object on the display unit, a left and right movement of both eyes, and a back and forth movement of both eyes.

4. The image processing apparatus according to claim 3, wherein the disparity calculator calculates a changed disparity to have the left eye image and the right eye image move horizontally in the same direction if the object on the display unit is located in a left side or a right side of both eyes due to the changed distance.

5. The image processing apparatus according to claim 3, wherein the disparity calculator calculates a changed disparity to have the left eye image and the right eye image move horizontally in different directions if the object on the display unit is located between both eyes due to the changed distance.

6. The image processing apparatus according to claim 3, further comprising a first size adjustor which adjusts a viewing size of the object viewed from the changed distance to a size from a distance before change if the predetermined distance is changed.

7. The image processing apparatus according to claim 1, further comprising a second size adjuster which enlarges or reduces a predetermined region of the image corresponding to the generated depth map.

8. The image processing apparatus according to claim 7, wherein the second size adjuster enlarges the predetermined region if a depth value of the predetermined region is equal to or greater than a critical value, and reduces the predetermined region if the depth value of the predetermined region is less than the critical value.

9. The image processing apparatus according to claim 7, further comprising a region setter which sets a predetermined region, wherein the region setter generates a binary map of pixels to determine a location, size, and shape of the predetermined region.

10. The image processing apparatus according to claim 1, further comprising a receiver which receives a two-dimensional or three-dimensional image signal.

11. A control method of an image processing apparatus comprising:

generating a depth map of a predetermined image which comprises at least one object;
estimating a reference disparity of a left eye image and a right eye image at a predetermined distance from the object based on the generated depth map;
calculating a changed disparity of the left eye image and the right eye image at a changed distance by using the estimated reference disparity if the predetermined distance is changed;
generating a three-dimensional image which moves horizontally from the left eye image and the right eye image corresponding to the changed disparity.

12. The control method according to claim 11, wherein the predetermined distance comprises a preset distance between the object displayed on the display unit and both eyes, and the changed distance comprises a change in the preset distance which results from at least one of a left and right movement of the object on the display unit, a left and right movement of both eyes, and a back and forth movement of both eyes.

13. The control method according to claim 12, wherein the calculating the changed disparity comprises calculating a changed disparity to have the left eye image and the right eye image move horizontally in the same direction if the object on the display unit is located in a left side or a right side of both eyes due to the change in the distance.

14. The control method according to claim 12, wherein the calculating the changed disparity comprises calculating a changed disparity to have the left eye image and the right eye image move horizontally in different directions if the object on the display unit is located between both eyes due to the changed distance.

15. The control method according to claim 12, further comprising adjusting a viewing size of the object viewed from the changed distance to a size of the object from a distance before change if the predetermined distance is changed.

# FIG. 1A
# (RELATED ART)

# FIG. 1B
# (RELATED ART)

# FIG. 1C
# (RELATED ART)

# FIG. 2

RECEIVER 10

DEPTH MAP GENERATOR 21

DISPARITY ESTIMATOR 22

DISPARITY CALCULATOR 23

REGION SETTER 24

FIRST SIZE ADJUSTER 25

SECOND SIZE ADJUSTER 26

3D IMAGE PROCESSOR 20

3D IMAGE GENERATOR 30

DISPLAY UNIT 40

100

EP 2 458 878 A2

# FIG. 3

FIG. 4

FIG. 5

# FIG. 6

# FIG. 7

EP 2 458 878 A2

# FIG. 8

# FIG. 9

SOURCE IMAGE

SIZE ADJUSTMENT OF OBJECT

REDUCED

ENLARGED

(A)

(C)

(B)

# FIG. 10

START

S11 — RECEIVE IMAGE SIGNAL

S12 — GENERATE DEPTH MAP OF RECEIVED IMAGE INCLUDING AT LEAST ONE OBJECT

S13 — ESTIMATE REFERENCE DISPARITY OF LEFT EYE IMAGE AND RIGHT EYE IMAGE AT PREDETERMINED DISTANCE OF OBJECT BASED ON DEPTH MAP

S14 — IS THERE ANY CHANGE IN PREDETERMINED DISTANCE?

YES      NO

S15 — CALCULATE CHANGED DISPARITY OF LEFT EYE IMAGE AND RIGHT EYE IMAGE AT CHANGED DISTANCE BY USING ESTIMATED REFERENCE DISPARITY

S17 — GENERATE 3D IMAGE WHICH MOVES HORIZONTALLY FROM LEFT EYE AND RIGHT EYE IMAGES CORRESPONDING TO REFERENCE DISPARITY

GENERATE 3D IMAGE WHICH MOVES HORIZONTALLY FROM LEFT EYE AND RIGHT EYE IMAGES CORRESPONDING TO CHANGED DISPARITY

S16

S18 — DISPLAY 3D IMAGE GENERATED BY ADJUSTING DISPARITY OF LEFT EYE AND RIGHT EYE IMAGES

END